# EUROPÄISCHE PATENTSCHRIFT

(11) **EP 2 218 557 B1**
(45) Veröffentlichungstag und Bekanntmachung des Hinweises auf die Patenterteilung: **12.02.2014**
(21) Anmeldenummer: 09013557.5
(22) Anmeldetag: 28.10.2009
(51) Int. Cl.: B25J 15/06, B65G 59/04, B66C 1/06

(54) **Verfahren und System zum Aufnehmen, Heben und Transportieren ferromagnetischer Bauteile**
Method and system for holding, lifting and transporting ferromagnetic components
Procédé et système de saisie, de levage et de transport de composants ferromagnétiques

(30) Priorität: 11.02.2009 DE 102009008387
(43) Veröffentlichungstag der Anmeldung: 18.08.2010
(73) Patentinhaber: ThyssenKrupp MillServices & Systems GmbH, 46149 Oberhausen (DE)
(72) Erfinder: Pohl, Thomas Gerd, 47178 Duisburg (DE); Cassing, Wilhelm, 59368 Werne (DE); Hoppen, Joachim, 45894 Gelsenkirchen (DE); Steger, Falk, 46049 Oberhausen (DE)
(74) Vertreter: Cohausz Hannig Borkowski Wißgott

(56) Entgegenhaltungen:
- WO-A1-2008/032333
- DE-B- 1 126 099

## Beschreibung

Die Erfindung betrifft ein Verfahren und ein System zum Aufnehmen, Heben und Transportieren von wenigstens einem ferromagnetischen Bauteil, insbesondere zum Aufnehmen, Heben und Transportieren von einem Stapel von mehreren Flachblechen, bei dem mit einer Magnetanordnung, umfassend wenigstens zwei Magnetsysteme, von jedem der Magnetsysteme eine magnetische Haltekraft auf das wenigstens eine Bauteil erzeugt wird.

Derartige Verfahren und Systeme sind im Stand der Technik bekannt und werden üblicherweise eingesetzt, um jegliche Bauteile, die mit Magnetkraft gehoben werden können, auf einfache Art und Weise zu transportieren. Ein solches Verfahren ist in Dokument DE 1126099 offenbart.

Bekannte Magnetanordnungen umfassen dabei gerade für den Einsatz bei großflächigen magnetischen Bauteilen nicht lediglich ein Magnetsystem, sondern wenigstens zwei oder sogar noch mehr Magnetsysteme, um über die Fläche solcher Bauteile verteilt die notwendigen magnetischen Haltekräfte auf die Bauteile wirken zu lassen. Magnetsysteme umfassen dabei üblicherweise zwei oder mehrere Polschuhe, mit denen durch das wenigstens eine ferromagnetische Bauteil hindurch ein magnetischer Kreis geschlossen werden kann und sich somit eine magnetische Anziehungskraft zwischen den Polschuhen und dem wenigstens einen ferromagnetischen Bauteil ergibt.

Eine Magnetanordnung kann dabei beispielsweise derart aufgebaut sein, dass diese eine Traverse umfasst, die sich in einer Längsrichtung erstreckt, wobei quer zu dieser Längsrichtung an der Traverse mehrere Quertraversen angeordnet sind, insbesondere in einem äquidistanten Abstand, die sich bevorzugterweise zu beiden Seiten der Längstraverse gleich weit erstrecken, wobei im Bereich eines jeden Endes einer Quertraverse ein Magnetsystem angeordnet ist. Bei einer solchen Magnetanordnung sind demnach die Magnetsysteme im Wesentlichen in einer rechteckigen Anordnung positioniert, dies ist jedoch nicht zwingend. Es können auch Magnetanordnungen abweichend hiervon für das erfindungsgemäße Verfahren bzw. System eingesetzt werden, wobei es im Wesentlichen lediglich darauf ankommt, dass eine solche Magnetanordnung mehrere, d.h. wenigstens zwei Magnetsysteme umfasst.

Magnetsysteme ihrerseits sind weiterhin hinsichtlich ihres Aufbaus in verschiedenen Ausführungen bekannt. So gibt es beispielsweise Magnetsysteme, die rein elektromagnetisch arbeiten und demnach eine Haltekraft erst durch Bestromung von Spulen erzeugen. Im unbestromten Zustand kann mit solchen Magnetsystemen keine magnetische Haltekraft erzeugt werden, so dass solche Systeme den Nachteil aufweisen, bei einem eventuellen Stromausfall die getragene Last zu verlieren.

Es werden demnach im Wesentlichen Magnetsysteme bevorzugt, die aus einer Kombination von Permanentmagneten und Elektromagneten aufgebaut sind, wobei durch einen Permanentmagneten konstant ein magnetisches Feld und damit gegenüber einem ferromagnetischen Bauteil auch eine magnetische Haltekraft erzeugt wird.

Zum Aufsetzen auf ein ferromagnetisches Bauteil kann, um eine magnetische Haltekraft von Anfang an zu vermeiden, die durch den Permanentmagneten erzeugte magnetische Haltekraft zunächst durch entsprechende Bestromung des elektromagnetischen Anteils eines solchen Magnetsystems kompensiert werden. Durch Abschalten oder Reduzieren der Bestromung bzw. gegebenenfalls auch Umkehrung der Bestromung kann die magnetische Haltekraft sodann insbesondere kontinuierlich erhöht werden. Ein solches Magnetsystem hat den Vorteil, dass selbst bei einem Stromausfall und demnach Wegfall einer Haltekraft durch den elektromagnetischen Anteil eines solchen Magnetsystems weiterhin noch eine Haltekraft erzeugt wird, die auf den Permanentmagneten alleine zurückgeht.

Es ist bekannt, dass die magnetische Haltekraft im Wesentlichen abhängig ist von dem magnetischen Fluss, der mittels eines jeweiligen Magnetsystems in Verbindung mit dem wenigstens einen Bauteil erzeugt wird. Dabei ist es jedoch so, dass bei Einsatz von mehreren Magnetsystemen, selbst bei identischem Aufbau und identischer Bestromung solcher Magnetsysteme, der magnetische Fluss und die damit erzeugte magnetische Haltekraft keineswegs bei allen Magnetsystemen identisch ist.

Dies ist darauf zurückzuführen, dass in dem jeweils erzeugten magnetischen Kreis zwischen Magnetsystem und dem wenigstens einen Bauteil verschiedene magnetische Widerstände existieren. Die magnetischen Widerstände können beispielsweise beeinflusst sein durch Luftspalte, Materialqualitäten der anzuhebenden Bauteile bzw. Magnetsysteme, Temperaturen der Bauteile und Magnetsysteme sowie insbesondere auch Oberflächenbeschaffenheiten des wenigstens einen Bauteils, wie sie beispielsweise variieren können durch Verzunderung, Rost, Beschichtungen, Unebenheiten etc.

Insbesondere beim Aufnehmen, Heben und Transportieren von nicht einstückigen, ferromagnetischen Bauteilen, wie beispielsweise beim Aufnehmen, Heben und Transportieren von mehreren Flachblechen verstärken sich diese Effekte, da die vorgenannten, zu den magnetischen Widerständen beitragenden Größen für jedes der einzelnen Flachbleche individuell gegeben sind.

Es kann daher beim Aufnehmen, Heben und Transportieren von ferromagnetischen Bauteilen, insbesondere wenn diese nicht kompakt sind und besonders beim Aufnehmen eines Stapels von mehreren Flachblechen zu erheblichen Abweichungen zwischen den einzelnen Haltekräften der jeweiligen Magnetsysteme kommen, insbesondere selbst wenn diese identisch angesteuert sind.

Bei Flachblechen kommt dabei als weiterer Effekt hinzu, dass diese nach dem Aufnehmen, d.h. im Hebe- und Transportzustand, nicht eine ideale gerade Erstreckung aufweisen, sondern eine Durchbiegung, die umso stärker ist, je weniger Magnetsysteme eingesetzt werden. Auch eine solche Durchbiegung ist maßgeblich für eine Reduktion der Haltekraft verantwortlich, insbesondere aufgrund einer Vergrößerung der Luftspalte zwischen einzelnen Flachblechen.

Es ergibt sich somit die Gefahr, bei üblicherweise eingesetzten Verfahren oder Systemen zum Aufnehmen, Heben und Transportieren von ferromagnetischen Bauteilen, dass die verschiedenen, durch die Magnetsysteme aufgebrachten magnetischen Haltekräfte stark voneinander abweichen, so dass auch bei einzelnen Magnetsystemen ein Unterschreiten einer notwendigen Mindesthaltekraft gegeben sein kann und somit ein getragenes Bauteil von einer Magnetanordnung abfallen kann mit den entsprechenden Sicherheitsrisiken für Personen. Insbesondere beim Aufnehmen, Heben und Transportieren eines Stapels von Flachblechen kann es aufgrund der Durchbiegung bei lokal unterschiedlichen Haltekräften an den verschiedenen Magnetsystemen schnell zu einem Abschälen wenigstens eines der Flachbleche kommen.

Es ist daher die Aufgabe der Erfindung, ein zuverlässiges Verfahren und System bereitzustellen, mittels dem das Aufnehmen, Heben und Transportieren von wenigstens einem ferromagnetischen Bauteil mittels einer Magnetanordnung mit mehreren, insbesondere wenigstens zwei Magnetsystemen, erreicht werden kann. Dabei ist es ebenso Aufgabe, beim Einsatz von Magnetsystemen mit reinen Elektromagneten oder kombinierten Permanent-Elektromagneten ein Verfahren und System bereitzustellen, mittels dem Energie zum Aufnehmen, Heben und Transportieren eingespart werden kann unter Beibehaltung notwendiger Sicherheitsaspekte.

Erfindungsgemäß wird die Aufgabe durch ein Verfahren gelöst, bei welchem der magnetische Fluss jedes Magnetsystems gemessen wird und jedes Magnetsystem hinsichtlich des Flusses eingeregelt wird. Insbesondere kann es bei dieser Einregelung vorgesehen sein, dass die Flüsse aller Magnetsysteme aneinander angeglichen werden. Die Aufgabe wird dementsprechend weiterhin gelöst durch ein System, welches geeignet ist, mittels wenigstens einem Sensor an jedem der Magnetsysteme und einer Steuerung den Fluss jedes der Magnetsysteme zu messen und einzuregeln, ebenso wie eingangs genannt insbesondere mit der Maßgabe, die Flüsse aller Magnetsysteme aneinander anzugleichen.

Der wesentliche Kerngedanke des Verfahrens bzw. Systems ist es, nicht lediglich die verschiedenen Magnetsysteme einer Magnetanordnung in gleicher Art und Weise anzusteuern, wie dies im Stand der Technik der Fall war, sondern tatsächlich an jedem der einzelnen Magnetsysteme den magnetischen Fluss zu messen und damit eine Information darüber zu erhalten, wie konkret die magnetische Haltekraft am Ort des betrachteten Magnetsystems ist.

Dabei wird als bekannt vorausgesetzt, dass der magnetische Fluss messtechnisch erfasst werden kann, beispielsweise durch wenigstens eine Messspule an jedem Magnetsystem, insbesondere an wenigstens einem der Polschuhe eines jeden Magnetsystems und Erfassung sowie Integration der induzierten Spannung bei Änderungen des Magnetfeldes und weiterhin der Tatsache, dass die magnetische Haltekraft etwa quadratisch abhängig ist vom magnetischen Fluss.

Durch das erfindungsgemäße Verfahren bzw. System wird demnach sicher gestellt, dass konkret eine Information über den magnetischen Fluss und damit die magnetische Haltekraft bei jedem Magnetsystem vorliegt, wobei es vorgesehen sein kann, dass jeder der Messwerte z.B. mit vorgegebenen Sollwerten verglichen und bei Abweichungen eingeregelt wird. Dabei kann es weiterhin vorgesehen sein, dass bei unterschiedlichen Handhabungsstadien, wie beispielsweise einerseits beim Aufnehmen, andererseits beim Heben und Transportieren, andere Sollwerte gelten. Ebenso kann es in einer bevorzugten Ausführung des Verfahrens vorgesehen sein, dass die Flüsse aller Magnetsysteme aneinander angeglichen werden. So kann nach einer Angleichung im Wesentlichen davon ausgegangen werden, dass an jedem Ort eines Magnetsystems die jeweilige Haltekraft bis auf Messtoleranzen gleich ist.

Dabei kann eine Angleichung beispielsweise derart erfolgen, dass von jedem der Magnetsysteme der magnetische Fluss gemessen und aus diesen Messwerten der größte Fluss ermittelt wird. In Kenntnis des größten Flusses bei einem der Magnetsysteme kann danach eine Ansteuerung der übrigen Magnetsysteme derart erfolgen, dass der magnetische Fluss dieser übrigen Magnetsysteme angehoben wird, bis dass auch bei diesen Magnetsystemen, insbesondere bis auf Messtoleranzen, der gleiche eingangs gemessene maximale Magnetfluss vorliegt. Z.B. kann dieser so ermittelte magnetische Fluss einen Sollwert bilden, auf den die Flüsse aller Magnetsystems eingeregelt werden.

Dabei wird es als besonders vorteilhaft angesehen, wenn in einer Weiterbildung des Verfahrens oder Systems der magnetische Fluss jedes Magnetsystems kontinuierlich während der gesamten Zeit vom Anheben des wenigstens einen Bauteils bis zum Absetzen gemessen und geregelt, insbesondere gemessen, geregelt und angeglichen wird, wie es eingangs beschrieben wurde.

Das kontinuierliche Erfassen während der gesamten Zeit ist dabei von besonderem Vorteil, da während einer Bewegung der Last, d.h. hier des wenigstens einen ferromagnetischen Bauteils, unterschiedliche Belastungen auf das Magnetsystem wirken können, beispielsweise aufgrund der Trägheit des wenigstens einen ferromagnetischen Bauteils, welche bewirkt, dass beim dynamischen Heben, d.h. in einer Beschleunigungs- und Bewegungsphase, die Haltekräfte grundsätzlich größer sein müssen, um ein sicheres Halten während dieser Phase zu bewirken als beim statischen Heben, bei welchem das Bauteil nicht bewegt wird.

Es kann daher wie eingangs vorgesehen sein, den Wert, auf welchen der magnetische Fluss an den einzelnen Magnetsystemen eingeregelt wird, insbesondere unter Berücksichtigung der Aneinanderangleichung in den einzelnen Phasen zwischen Aufnehmen und Absetzen des wenigstens einen ferromagnetischen Bauteils unterschiedlich sein kann, beispielsweise also bei einer Beschleunigung des wenigstens einen Bauteils beim Heben nach oben ein höherer magnetischer Fluss gewählt wird als bei einer Translation des wenigstens einen Bauteils unter Beibehaltung einer Höhe.

Durch die dynamische Anpassung eines einzuregelnden Flusses an den einzelnen Magnetsystemen kann während der Durchführung des Verfahrens gegenüber üblichen bekannten Verfahren, bei denen ein Magnetfluss mit viel zu großen Sicherheitszuschlägen konstant eingestellt wird, Energie eingespart werden ohne Sicherheitsaspekte zu vernachlässigen.

Dabei kann es auch vorgesehen sein, dass an einer Magnetanordnung ein Bewegungs- und/oder Beschleunigungssensor vorgesehen ist, der die Bewegung oder Beschleunigung erfasst und in Abhängigkeit dieser Werte die Magnetanordnung, insbesondere die einzelnen Magnetsysteme, hinsichtlich des magnetischen Flusses ändert. Hierfür kann beispielsweise mit einer Steuerung ein Signal eines solchen Sensors ausgewertet werden und der magnetische Fluss eines jeden Magnetsystems angepasst werden. Ein solcher Sensor kann eingesetzt werden um die eingangs genannten Sollwerte zu ändern.

Allgemein bzw. insbesondere im Zusammenhang mit einer solchen eingangs genannten Sensorsteuerung kann es vorgesehen sein, dass der Fluss aller Magnetsysteme auf einen Wert größer gleich einem geforderten Sicherheitswert eingestellt wird. Bezogen auf die eingangs genannten Ausführungen kann dieser Sicherheitswert, der dem genannten Sollwert entsprechen kann, variabel sein, insbesondere variabel bzw. abhängig von den Bewegungssituationen des wenigstens einen ferromagnetischen Bauteils.

Dabei wird es als besonders vorteilhaft empfunden, wenn ein Sicherheitswert individuell bei jedem Transport für das wenigstens eine zu transportierende Bauteil ermittelt wird. So ist nämlich festzustellen, dass so, wie es bereits eingangs beschrieben wurde, die konkret vorliegenden magnetischen Haltekräfte abhängig sind von den wirkenden magnetischen Widerständen, die in den magnetischen Kreise eines jeden Magnetsystems vorliegen. Da diese magnetischen Widerstände von Bauteil zu Bauteil verschieden sind, wird sich demnach auch ein möglicher Sicherheitswert von Bauteil zu Bauteil ändern. Mit dem erfindungsgemäßen Verfahren ist es demnach vorgesehen, diesen Sicherheitswert individuell für ein zu transportierendes Bauteil bzw. eine Anordnung von mehreren gleichzeitig zu transportierenden Bauteilen, wie beispielsweise bei einem Stapel von mehreren Flachblechen, zu ermitteln. Insbesondere bevor ein Anheben zum Transport stattfindet.

In einer Ausführungsform kann es dafür vorgesehen sein, dass der Sicherheitswert ermittelt wird in Abhängigkeit eines minimal gemessenen magnetischen Flusses, der benötigt wird, um das wenigstens eine Bauteil anzuheben. Für eine solche Messung können alles Magnetsysteme gleich angesteuert werden bzw. auf gleiche Haltekraft bzw. Fluss eingeregelt werden.

So kann hierdurch ein unterer Grenzwert des magnetischen Flusses festgestellt werden, unterhalb dem das Anheben eines Bauteils nicht möglich ist, jedoch das Anheben des wenigstens einen Bauteils möglich ist bei einer Einstellung eines magnetischen Flusses oberhalb dieses minimal gemessenen Wertes.

Es kann sodann vorgesehen sein, dass der Sicherheitswert sich ergibt aus diesem festgestellten, minimal benötigten Fluss multipliziert mit einem Sicherheitsfaktor. Dieser Sicherheitsfaktor kann wiederum, wie eingangs genannt, variabel sein, bzw. verschieden eingestellt werden, beispielsweise für die verschiedenen Bewegungssituationen des wenigstens einen Bauteils.

In einer besonderen Ausführung, bei der es vorgesehen ist, einen Stapel von mehreren Flachblechen anzuheben, wird in einer Weiterbildung des Verfahrens nach dem Anheben eines Stapels von mehreren Flachblechen der magnetische Fluss reduziert, um so zu bewirken, dass wenigstens das unterste bislang gehaltene Flachblech sich vom Stapel löst und abfällt.

Diesem Verfahrensschritt liegt die Überlegung zugrunde, dass der magnetische Fluss, ausgehend vom Magnetsystem, durch die einzelnen Flachbleche hindurch bis zum untersten Flachblech wirken muss, so dass ersichtlich das unterste Flachblech aus einem solchen gehaltenen Stapel mit der geringsten Haltekraft am Stapel haftet und somit für dieses unterste von mehreren Flachblechen das Risiko am höchsten ist, dass dieses sich von dem Stapel löst und somit ein erhebliches Gefährdungspotential darstellt.

Durch das erfindungsgemäße Verfahren wird sichergestellt, dass bei einer Reduktion der Haltekraft sich wenigstens dieses unterste Flachblech löst und somit das eingangs beschriebene Risiko eliminiert ist.

Um das Ablösen des untersten oder gegebenenfalls auch von mehreren unteren Blechen von dem Stapel auf sichere und kontrollierte Art und Weise zu erzielen, kann es in einer Weiterbildung vorgesehen sein, dass der magnetische Fluss von wenigstens einem äußeren bzw. bezogen auf die Flachbleche randnahem Magnetsystem, beispielsweise unter Beibehaltung der magnetischen Flüsse der übrigen Magnetsysteme verringert wird.

Dies bedeutet, dass sich in einem äußeren, insbesondere randnahem Bereich eines Flachbleches sich die Haltekraft verringert, so dass ein solches Flachblech nicht abrupt sich insgesamt vom Stapel löst, sondern ausgehend von einer Seite sich langsam durch ein Abschälen vom Stapel löst.

Alternativ kann es auch vorgesehen sein, dass der magnetische Fluss von wenigstens einem äußeren Magnetsystem stärker reduziert wird als der magnetische Fluss der übrigen Magnetsysteme. Hier werden demnach gegenüber der vorherigen Ausführung jeweils der magnetische Fluss von allen Magnetsystemen reduziert, jedoch der von den äußeren, insbesondere randnahen Magnetsystemen stärker.

Beide Ausführungen bewirken ein Abschälen des Flachbleches, welches beispielsweise aus einer geringen Höhe nach dem Aufnehmen eines solchen Stapels durchgeführt werden kann.

Es ist sodann erfindungsgemäß vorgesehen, nach dieser eingangs genannten Reduktion des magnetischen Flusses von wenigstens einem äußeren Magnetsystem den magnetischen Fluss wiederum zu erhöhen, mindestens auf den ursprünglichen Wert, in bevorzugter Ausführung jedoch noch darüber hinaus.

So besteht beispielsweise die Möglichkeit, in Abhängigkeit des gemessenen magnetischen Flusses wenigstens eines Magnetsystems zum Zeitpunkt des Abfallens wenigstens des unteren Flachbleches wiederum einen Sicherheitswert zu ermitteln, auf den der magnetische Fluss aller Magnetsysteme anschließend eingestellt wird, insbesondere wieder unter dem Aspekt der untereinander Angleichung der magnetischen Flüsse aller Magnetsysteme. Dieser Sicherheitswert kann wiederum einen Sollwert für eine Regelung jedes einzelnen Magnetsystems bilden.

Beispielsweise kann auch hier sich der Sicherheitswert ergeben durch die Anwendung eines Sicherheitsfaktors in Multiplikation mit dem zum Zeitpunkt des Abfallens gemessenen magnetischen Fluss an wenigstens einem der Magnetsysteme, beispielsweise an dem Magnetsystem, welches von allen zum Zeitpunkt des Abfallens den geringsten magnetischen Fluss aufgewiesen hat.

In einer möglichen Ausführungsform kann es dabei beispielsweise vorgesehen sein, den magnetischen Fluss mindestens zu verdoppeln, wodurch sich die Haltekraft aufgrund des quadratischen Zusammenhangs mindestens vervierfacht.

Hierdurch können beispielsweise Vorgaben der Berufsgenossenschaften erfüllt werden, die fordern, dass ein ferromagnetisches Bauteil bzw. ein Stapel von solchen, also beispielsweise ein Stapel von Flachblechen mit einer mindestens dreifachen Sicherheit gehalten wird. Diese dreifache Sicherheit wird ohne Frage erreicht, wenn ausgehend von einem magnetischen Fluss zum Zeitpunkt des Abfallens eines unteren Bleches von einem Blechstapel dieser magnetische Fluss verdoppelt wird.

Bezogen auf die eingangs beschriebenen Verfahrensaspekte kann es vorgesehen sein, dass eine Angleichung der magnetischen Flüsse aller Magnetsysteme jedes Mal nach einer Änderung des magnetischen Flusses an wenigstens einem der Magnetsysteme erfolgt.

Beispielsweise also unmittelbar nach einer Phase des Anhebens eines Stapels, um zunächst eine einheitliche Ausgangssituation für die Haltekraft an allen Magnetsystemen zu erzielen. Im nächsten Fall beispielsweise, nachdem das Ablösen wenigstens eines unteren Bleches von einem Stapel stattgefunden hat. Hier folgt die Angleichung insbesondere nach Einstellung der magnetischen Flüsse auf den eingangs diskutierten Sicherheitswert. Eine Angleichung der magnetischen Flüsse während der Situation, dass bewusst wenigstens das unterste Flachblech sich lösen soll von einem Stapel, ist hingegen entbehrlich, da diese Situation bewusst, insbesondere durch unterschiedliche Ansteuerung der Magnetsysteme hervorgerufen werden soll.

Die Angleichung sowie insbesondere auch Einregelung auf einen Wert zumindest gleich oder größer dem vorgenannten Sicherheitswert kann sodann auch in den verschiedenen Bewegungsphasen vorgenommen werden, um sicherzustellen, dass sowohl bei gleichmäßiger als auch beschleunigter Bewegung der magnetisch getragenen Bauteile diese immer sicher an der Magnetanordnung haften.

Ein Ausführungsbeispiel der Erfindung wird anhand der nachfolgenden Figuren näher erläutert. Es zeigen:
- Figur 1: eine Magnetanordnung, wie sie zum Zweck des Einsatzes des erfindungsgemäßen Verfahrens genutzt werden kann.
- Figur 2: die grafische Darstellung der Haltekraft in Abhängigkeit der Zeit in verschiedenen Situationen des Verfahrens

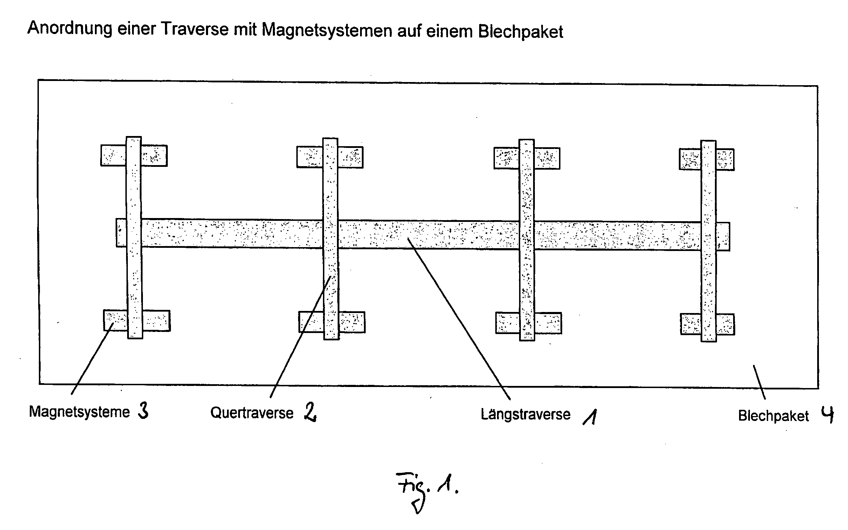

Die Figur 1 zeigt zunächst in einer Übersicht eine mögliche Magnetanordnung, umfassend eine Längstraverse 1, an welcher quer zu dieser in einem äquidistanten Abstand Quertraversen 2 angeordnet sind.

Diese Quertraversen 2 überragen zu beiden Seiten die Längstraverse 1 im Wesentlichen um die gleiche Länge, wobei im Bereich des Endes einer jeglichen Quertraverse 2 jeweils ein Magnetsystem 3 angeordnet ist, welches in einer bevorzugten Ausführung z.B. als ein System mit Permanentmagnet und Elektromagnet in Kombination ausgestaltet sein kann. Ebenso können rein elektromagnetische Magnetsysteme vorgesehen sein sowie auch bistabile Systeme oder andere am Markt erhältliche Ausführungsformen von Magnetsystemen.

Erkennbar ist hier, dass sich demnach insgesamt bei der hier dargestellten Ausführungsform acht Magnetsysteme 3 ergeben, die im Wesentlichen in einer rechtwinkligen Konfiguration zueinander angeordnet sind. Jedes Magnetsystem bildet dabei ein Paar von Polschuhen, zwischen denen sich die Magnetfeldlinien durch ein hier zu tragendes Blechpaket aus einem Stapel von mehreren Flachblechen erstrecken und somit einen geschlossenen magnetischen Kreis bilden. Das Blechpaket 4 ist hier lediglich in der Aufsicht von oben dargestellt. Statt der hier konkret gezeigten rechtwinkligen Konfiguration wäre auf jede andere Anordnung der Magnetsysteme 3 möglich.

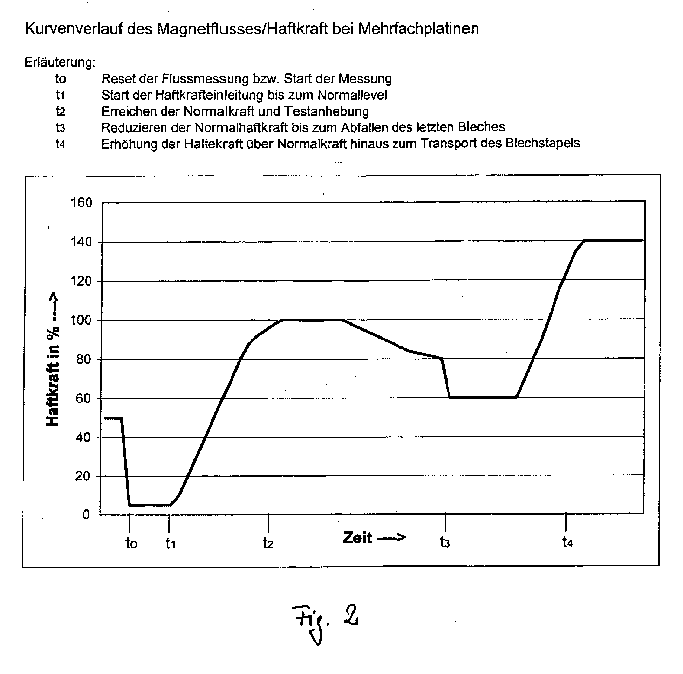

Die Figur 2 zeigt eine mögliche Ausführungsform des erfindungsgemäßen Verfahrens. Dargestellt ist hier exemplarisch lediglich die Haltekraft in Prozent von einem der Magnetsysteme. Da die Haltekraft eine Proportionalität zum Fluss aufweist, ist die hier gewählte Messung und Darstellung der Haltekraft äquivalent zu einer Messung und Darstellung des magnetischen Flusses.

Dabei ist es gemäß dem wesentlichen Gedanken der Erfindung vorgesehen, dass die hier dargestellte Haltekraft zumindest einmalig, bevorzugt in mehreren Situationen der Bewegung des Blechpaketes bei den einzelnen Magnetsystemen 3 aneinander angeglichen wird. Das Durchführen des Angleichens ist in den Figuren nicht näher dargestellt und erfolgt durch eine übergeordnete Steuerung durch Messen und Vergleichen der jeweils ermittelten magnetischen Flüsse bzw. Haltekräfte, die proportional zum Quadrat des Flusses sind.

Hier ist erkennbar, dass zur Durchführung des erfindungsgemäßen Verfahrens in einer bevorzugten Ausführung zum Heben von mehreren Blechen zunächst zu einem Zeitpunkt T0 bisherige Messwerte für die Haltekraft zurückgesetzt werden, um einen definierten Ausgangszustand zu erhalten. Nach diesem Zurücksetzen kann beispielsweise eine Magnetanordnung mit mehreren Magnetsystemen 3, wie in der Figur 1 beschrieben, auf das Blechpaket 4 aufgesetzt werden.

Zum Zeitpunkt T1 ist es vorgesehen, die Haltekraft zu erhöhen, beispielsweise durch Ansteuerung (Änderung der Bestromung) von Elektromagneten der einzelnen Magnetsysteme 3. Beispielsweise kann bei einer Kombination von Permanent- und Elektromagneten die Bestromung der Elektromagnete zurückgenommen werden, so dass die durch die Permanentmagneten erzeugte Haltekraft wirkt. Gegebenenfalls kann die Bestromung umgekehrt werden, um die effektive Haltekraft über diejenige anzuheben, die alleine durch die Permanentmagnete erzielt wird. Insgesamt ist es für das erfindungsgemäße Verfahren vorgesehen, die Bestromung derart durchzuführen, dass mit den jeweils verwendeten Magnetsystemen 3, seien es reine elektromagnetische oder kombinierte aus Permanent- und Elektromagneten, die gewünschten effektiven magnetischen Flüsse bzw. Haltekräfte erzielt werden, beispielsweise wie in der Figur 2 dargestellt.

Der Figur 2 ist weiterhin zu entnehmen, dass nach dem Zeitpunkt T2, wo beispielsweise schon eine erste Angleichung der Haltekräfte der einzelnen Magnetsysteme stattgefunden haben kann, die Haltekraft reduziert wird, bis dass im vorliegenden Fall beispielsweise das letzte Blech des Stapels sich von dem Stapel löst und abfällt. Dies ist zum Zeitpunkt T3 zu erkennen, zu welchem die Haltekraft im vorliegenden Beispiel von zuvor 100 % auf 60% reduziert ist. Auch hier kann zum oder nach dem Zeitpunkt T3 vorgesehen sein, eine Angleichung der Haltekräfte bzw. magnetischen Flüsse der einzelnen Magnetsysteme 3 wiederum erfindungsgemäß vorzunehmen.

Nach dem Verlust des untersten Bleches, welches das höchste Sicherheitsrisiko dargestellt hat, ist es im vorliegenden Fall vorgesehen, die magnetische Haltekraft, ausgehend von der zum Zeitpunkt des Abfallens vorherrschenden Haltekraft zum Zeitpunkt T4 zu erhöhen, insbesondere von hier 60% etwas mehr als zu verdoppeln, nämlich auf 140%.

Hierdurch wird eine ausreichende Haltekraft bereitgestellt, die ausreichend ist, um mit genügendem Sicherheitszuschlag das an der magnetischen Anordnung hängende Blechpaket zu transportieren, da bereits ab dem Zeitpunkt T3 nach dem Verlust des untersten Bleches die verbleibenden Bleche mit einer Haltekraft gehalten werden, die deutlich, z.B. 1,5-fach über einer Mindestkraft zum Halten liegen kann. Durch die etwas mehr als Verdoppelung wird daher in diesem Beispiel eine Haltekraft ab dem Zeitpunkt T4 erreicht, die beispielsweise mehr als den Faktor 3 über der Mindestkraft liegt und damit alle Sicherheitsanforderungen erfüllt.

Dabei kann es wiederum nach dem Zeitpunkt T4 vorgesehen sein, eine Angleichung der Haltekräfte bzw. Magnetflüsse der einzelnen Magnetsysteme vorzunehmen und auch weiterhin während des folgenden Transportes zu überwachen, d.h. zu messen und einzuregeln, gegebenenfalls auch in den folgenden Transportphasen, wie gleichmäßiger oder beschleunigter Bewegung sowie dem Absetzen, kontinuierlich zu überwachen.

Bezogen auf diese Ausführung ist festzuhalten, dass diese nicht durch die konkret genannten Prozentangaben der Haltekräfte beschränkt ist. Diese dienen lediglich zur Verdeutlichung diese Verfahrens. Wesentlich ist lediglich der qualitative Verlauf der Haltekräfte.

Zusammenfassend kann festgehalten werden, dass mit dem erfindungsgemäßen Verfahren sowohl zum einen durch die Angleichung der Haltekräfte bzw. magnetischen Flüsse bei jedem der einzelnen Magnetsysteme sowie auch speziell bei der erfindungsgemäßen Ausführung zum Transportieren von Blechpaketen und dem Lösen zumindest des jeweils untersten Blechpaketes ein besonders sicheres Verfahren bzw. System zum Transport von Blechpaketen bereitgestellt - wird, da zu jedem Zeitpunkt des Bewegens eines solchen Blechpaketes das definitive Überschreiten der mit einem Sicherheitszuschlag versehenen Haltekräfte gewährleistet werden kann.

## Patentansprüche

1. Verfahren zum Aufnehmen, Heben und Transportieren von wenigstens einem ferromagnetischen Bauteil, insbesondere zum Aufnehmen, Heben und Transportieren von einem Stapel (4) von mehreren Flachblechen, bei dem mit einer Magnetanordnung (1,2,3) umfassend wenigstens zwei Magnetsysteme (3) von jedem der Magnetsysteme (3) eine magnetische Haltekraft auf das wenigstens eine Bauteil erzeugt wird, **dadurch gekennzeichnet, dass** der magnetische Fluss jedes Magnetsystems (3) gemessen wird und jedes Magnetsystem (3) hinsichtlich des Flusses eingeregelt wird, insbesondere wobei die Flüsse aller Magnetsysteme (3) aneinander angeglichen werden.

2. Verfahren nach Anspruch 1, **dadurch gekennzeichnet, dass** der magnetische Fluss jedes Magnetsystems (3) kontinuierlich während der gesamten Zeit vom Anheben des wenigstens einen Bauteils bis zum Absetzen gemessen und geregelt, insbesondere gemessen, geregelt und angeglichen wird.

3. Verfahren nach einem der vorherigen Ansprüche, **dadurch gekennzeichnet, dass** der Fluss aller Magnetsysteme (3) auf einen Wert größer gleich einem geforderten Sicherheitswert eingestellt wird.

4. Verfahren nach Anspruch 3, **dadurch gekennzeichnet, dass** der Sicherheitswert individuell bei jedem Transport für das wenigstens eine zu transportierende Bauteil ermittelt wird.

5. Verfahren nach Anspruch 3, **dadurch gekennzeichnet, dass** der Sicherheitswert ermittelt wird in Abhängigkeit eines minimalen gemessenen magnetischen Flusses, der benötigt wird, um das wenigstens eine Bauteil anzuheben, insbesondere wobei der Sicherheitswert des festgestellten minimal benötigten Flusses multipliziert mit einem Sicherheitsfaktor entspricht.

6. Verfahren nach einem der vorherigen Ansprüche, **dadurch gekennzeichnet, dass** nach dem Anheben eines Stapels von mehreren Flachblechen der magnetische Fluss reduziert wird, bis dass wenigstens das unterste bislang gehaltene Flachblech sich vom Stapel (4) löst und abfällt.

7. Verfahren nach Anspruch 6, **dadurch gekennzeichnet, dass** der magnetische Fluss von wenigstens einem äußeren Magnetsystem (3), insbesondere unter Beibehaltung der magnetischen Flüsse der übrigen Magnetsysteme (3) verringert wird, so dass sich ein bislang gehaltenes Flachblech vom Stapel (4) abschält.

8. Verfahren nach Anspruch 6, **dadurch gekennzeichnet, dass** der magnetische Fluss von wenigstens einem äußeren Magnetsystem (3), stärker reduziert wird als der magnetische Fluss der übrigen Magnetsysteme (3), so dass sich ein bislang gehaltenes Flachblech vom Stapel (4) abschält.

9. Verfahren nach einem der vorherigen Ansprüche 6 bis 8, **dadurch gekennzeichnet, dass** in Abhängigkeit des gemessenen magnetischen Flusses wenigstens eines Magnetsystems (3) zum Zeitpunkt des Abfallens wenigstens des untersten Flachbleches ein Sicherheitswert ermittelt oder festgelegt wird, auf den der magnetische Fluss aller Magnetsysteme anschließend eingestellt wird.

10. Verfahren nach einem der vorherigen Ansprüche, **dadurch gekennzeichnet, dass** eine Angleichung der magnetischen Flüsse aller Magnetsysteme (3) jedes Mal nach einer Änderung des magnetischen Flusses an einem der Magnetsysteme (3) erfolgt, insbesondere mit Ausnahme der beabsichtigten ungleichmäßigen Reduktion der magnetischen Flüsse zum Zweck des Abschälens wenigstens eines unteres Flachbleches von einem Stapel (4).

11. System zum Aufnehmen, Heben und Transportieren von wenigstens einem ferromagnetischen Bauteil, insbesondere zum Aufnehmen, Heben und Transportieren von einem Stapel (4) von mehreren Flachblechen, umfassend eine Magnetanordnung (1,2,3) mit wenigstens zwei Magnetsystemen (3), wobei mit jedem der Magnetsysteme (3) eine magnetische Haltekraft auf das wenigstens eine Bauteil erzeugbar ist, **dadurch gekennzeichnet, dass** es wenigstens einen Sensor an jedem der Magnetsysteme (3) aufweist zur Messung des magnetische Flusses dieses Magnetsystems (3) und eine Steuerung die eingerichtet ist, den Fluss jedes der Magnetsysteme (3) zu messen und einzuregeln, insbesondere die Flüsse aller Magnetsysteme (3) aneinander anzugleichen.

## Claims

1. Method for receiving, lifting, and transporting at least one ferromagnetic component, in particular for receiving, lifting and transporting a stack (4) of multiple flat sheets, in which, with an arrangement of magnets (1, 2, 3) comprising at least two magnet systems (3), a magnetic holding force is produced on the at least one component by each of the magnet systems (3), **characterized in that** the magnetic flux of each magnet system (3) is measured and each magnet system (3) is controlled with respect to the flux, in particular the fluxes of all the magnet systems (3) being made equal to one another.

2. Method according to Claim 1, **characterized in that**, during the entire time from the raising of the at least one component to the setting down, the magnetic flux of each magnet system (3) is continuously measured and controlled, in particular is measured, controlled and made equal.

3. Method according to one of the preceding claims, **characterized in that** the flux of all the magnet systems (3) is set to a value greater than or equal to a required safety value.

4. Method according to Claim 3, **characterized in that**, with each transporting operation, the safety value is determined individually for the at least one component to be transported.

5. Method according to Claim 3, **characterized in that** the safety value is determined in dependence on a minimum measured magnetic flux that is required in order to raise the at least one component, the safety value of the established minimally required flux corresponding in particular to a multiple of a safety factor.

6. Method according to one of the preceding claims, **characterized in that**, after the raising of a stack of multiple flat sheets, the magnetic flux is reduced until at least the lowermost previously held flat sheet is detached from the stack (4) and falls off.

7. Method according to Claim 6, **characterized in that** the magnetic flux of at least one outer magnet system (3) is reduced, in particular while maintaining the magnetic fluxes of the other magnet systems (3), so that a previously held flat sheet peels off from the stack (4).

8. Method according to Claim 6, **characterized in that** the magnetic flux of at least one outer magnet system (3) is reduced to a greater extent than the magnetic flux of the other magnet systems (3), so that the previously held flat sheet peels off from the stack (4).

9. Method according to one of the preceding Claims 6 to 8, **characterized in that**, in dependence on the measured magnetic flux of at least one magnet system (3) at the point in time at which at least the lowermost flat sheet falls off, a safety value is determined or established, and the magnetic flux of all the magnet systems is subsequently set to this value.

10. Method according to one of the preceding claims, **characterized in that** an equalization of the magnetic fluxes of all the magnet systems (3) is performed each time after there is a change of the magnetic flux at one of the magnet systems (3), in particular with the exception of the intended unequal reduction of the magnetic fluxes for the purpose of peeling off at least one lower flat sheet from a stack (4).

11. System for receiving, lifting and transporting at least one ferromagnetic component, in particular for receiving, lifting and transporting a stack (4) of multiple flat sheets, comprising an arrangement of magnets (1, 2, 3) with at least two magnet systems (3), it being possible for a magnetic holding force to be produced on the at least one component by each of the magnet systems (3), **characterized in that** it has at least one sensor at each of the magnet systems (3), for measuring the magnetic flux of this magnet system (3), and a controller, which is designed to measure and control the flux of each of the magnet systems (3), in particular to make the fluxes of all the magnet systems (3) equal to one another.

## Revendications

1. Procédé de saisie, de levage et de transport d'au moins un composant ferromagnétique, en particulier pour la saisie, le levage et le transport d'une pile (4) de plusieurs tôles plates, dans lequel avec un agencement magnétique (1, 2, 3) comprenant au moins deux systèmes magnétiques (3), une force de retenue magnétique est générée sur l'au moins un composant par chacun des systèmes magnétiques (3), **caractérisé en ce que** le flux magnétique de chaque système magnétique (3) est mesuré et chaque système magnétique (3) est ajusté en termes de flux, les flux de tous les systèmes magnétiques (3) étant notamment ajustés les uns aux autres.

2. Procédé selon la revendication 1, **caractérisé en ce que** le flux magnétique de chaque système magnétique (3), en continu pendant toute la durée depuis le levage de l'au moins un composant jusqu'à son abaissement, est mesuré et régulé, en particulier mesuré, régulé et ajusté.

3. Procédé selon l'une quelconque des revendications précédentes, **caractérisé en ce que** le flux de tous les systèmes magnétiques (3) est ajusté à une valeur supérieure ou égale à une valeur de sécurité exigée.

4. Procédé selon la revendication 3, **caractérisé en ce que** la valeur de sécurité est déterminée de manière individuelle pour chaque transport pour l'au moins un composant à transporter.

5. Procédé selon la revendication 3, **caractérisé en ce que** la valeur de sécurité est déterminée en fonction d'un flux magnétique minimal mesuré qui est nécessaire pour soulever l'au moins un composant, notamment la valeur de sécurité correspondant au flux minimal nécessaire établi multiplié par un facteur de sécurité.

6. Procédé selon l'une quelconque des revendications précédentes, **caractérisé en ce qu'**après le soulèvement d'une pile de plusieurs tôles plates, le flux magnétique est réduit jusqu'à ce qu'au moins la tôle plate la plus inférieure jusqu'ici retenue se détache de la pile (4) et tombe.

7. Procédé selon la revendication 6, **caractérisé en ce que** le flux magnétique d'au moins un système magnétique extérieur (3), en particulier en conservant les flux magnétiques des autres systèmes magnétiques (3), est réduit de telle sorte qu'une tôle plate jusqu'ici retenue se détache de la pile (4).

8. Procédé selon la revendication 6, **caractérisé en ce que** le flux magnétique d'au moins un système magnétique extérieur (3) est réduit plus fortement que le flux magnétique des autres systèmes magnétiques (3), de sorte qu'une tôle plate jusqu'ici retenue se détache de la pile (4).

9. Procédé selon l'une quelconque des revendications précédentes 6 à 8, **caractérisé en ce qu'**en fonction du flux magnétique mesuré d'au moins un système magnétique (3) à l'instant de la chute d'au moins la tôle plate la plus inférieure, une valeur de sécurité est déterminée ou établie, à laquelle valeur de sécurité le flux magnétique de tous les systèmes magnétiques est ensuite ajusté.

10. Procédé selon l'une quelconque des revendications précédentes, **caractérisé en ce qu'**un ajustement des flux magnétiques de tous les systèmes magnétiques (3) a lieu à chaque fois après une variation du flux magnétique au niveau de l'un des systèmes magnétiques (3), notamment à l'exception de la réduction escomptée irrégulière des flux magnétiques dans le but de détacher au moins une tôle plate inférieure d'une pile (4).

11. Système de saisie, de levage et de transport d'au moins un composant ferromagnétique, en particulier pour la saisie, le levage et le transport d'une pile (4) de plusieurs tôles plates, comprenant un agencement magnétique (1, 2, 3) comprenant au moins deux systèmes magnétiques (3), une force de retenue magnétique pouvant être générée sur l'au moins un composant avec chacun des systèmes magnétiques (3), **caractérisé en ce qu'**il présente au moins un capteur au niveau de chacun des systèmes magnétiques (3) pour mesurer le flux magnétique de ce système magnétique (3) et une commande qui est prévue pour mesurer et réguler le flux de chacun des systèmes magnétiques (3), notamment pour ajuster les flux de tous les systèmes magnétiques (3) les uns aux autres.
